(19) **Europäisches Patentamt**

**European Patent Office**

**Office européen des brevets**

(11) Veröffentlichungsnummer: **0 309 930 B1**

(12) EUROPÄISCHE PATENTSCHRIFT

(45) Veröffentlichungstag der Patentschrift: **29.07.92**

(21) Anmeldenummer: **88115642.6**

(22) Anmeldetag: **23.09.88**

(51) Int. Cl.⁵: **B23K 15/00**

(54) Verfahren zum Nachführen eines Elektronenstrahls entlang der Stossfuge zweier zu verschweissender Werkstücke beim Elektronenstrahlschweissen.

(30) Priorität: **30.09.87 DE 3732880**

(43) Veröffentlichungstag der Anmeldung:
**05.04.89 Patentblatt 89/14**

(45) Bekanntmachung des Hinweises auf die Patenterteilung:
**29.07.92 Patentblatt 92/31**

(84) Benannte Vertragsstaaten:
**CH DE FR GB LI**

(56) Entgegenhaltungen:
**DE-A- 2 937 094**
**DE-B- 2 937 646**
**DE-C- 3 043 635**

(73) Patentinhaber: **PTR Präzisionstechnik GmbH**
**Im Spitzen Sand 1**
**W-6457 Maintal(DE)**

(72) Erfinder: **Sperzel, Wolfgang, Dipl.-Ing.**
**Heimatfriedering 3 A**
**W-6460 Gelnhausen-Hailer(DE)**
Erfinder: **Petzoldt, Jürgen, Dipl.-Ing.**
**Donaustrasse 21**
**W-6460 Gelnhausen-Meerholz(DE)**
Erfinder: **Müller, Walter, Dipl.-Ing.**
**Am Galgenberg 8**
**W-6497 Steinau-Ulmbach(DE)**

(74) Vertreter: **Sartorius, Peter, Dipl.-Ing. Patentanwalt**
**Elisabethenstrasse 24**
**W-6803 Edingen-Neckarhausen 2(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Verfahren zum Nachführen eines Elektronenstrahls entlang der Stoßfuge zweier zu verschweißender Werkstücke beim Elektronenstrahlschweißen, wobei dieser Elektronenstrahl durch ein Ablenksystem steuerbar ist und wobei eine Detektoreinrichtung vorgesehen ist, welche die von der Stoßfuge ausgehenden Strahlen von den Strahlen unterscheidet, die von den Werkstücken ausgehen, und welche eine Steuereinrichtung aufweist, die eine Abtastung der Werkstücke unter wenigstens einmaliger Überquerung der Stoßfuge vornimmt.

Beim Elektronenstrahlschweißen ist es wichtig, die Fuge zwischen den zu verschweißenden Werkstücken zu erkennen und den Elektronenstrahl so zu steuern, daß er direkt auf die Fuge oder direkt neben die Fuge auftrifft und entsprechend dem Fortschritt des Schweißvorgangs nachgeführt wird. Die Strahlnachführung kann in der Weise erfolgen, daß vor jedem Schweißvorgang die Position der zu verschweißenden Werkstücke festgelegt und die Lage cer Schweißfuge an einer Stelle gemessen wird. Der gemessene Wert wird sodann gespeichert und für den weiteren Schweißvorgang als Sollwert verwendet. Es ist indessen auch möglich, die Lage der Schweißfuge nicht nur an einer Stelle, sondern an mehreren Stellen zu messen und den Elektronenstrahl im Verlaufe des Schweißvorgangs entsprechend den jeweils gemessenen Positionen durch Ablenkung des Strahls oder durch Verschieben des Tisches nachzuführen. Ferner ist es möglich, die Lage der Schweißfuge während des eigentlichen Schweißvorgangs zu erfassen und für die Strahlnachführung heranzuziehen.

Bei der Messung der Lage der Schweißfuge wird in der Regel der Effekt ausgenutzt, daß sich das Rückstreuverhalten der Elektronen im Bereich der Stoßfuge von dem Rückstreuverhalten an ebenen Werkstücken unterscheidet. Indem man den Strom der rückgestreuten Elektronen mißt, kann man feststellen, ob der Elektronenstrahl gerade auf die Fuge oder auf ein Werkstück trifft.

Es ist bereits ein Verfahren zum automatischen Schweißen eines Werkstücks mittels eines fokussierten Elektronenstrahls entlang eines Schweißspalts bekannt, bei dem vor dem eigentlichen Schweißvorgang die rückgestreuten Elektronen gemessen und für die Gewinnung von mehreren Positionsdaten der Schweißfuge herangezogen werden (DE-A-30 43 635). Bei dem anschließenden Schweißvorgang wird das Werkstück entlang seinem Schweißspalt an dem Auftreffpunkt des Elektronenstrahls vorbeibewegt, wobei dieser Auftreffpunkt mittels der gespeicherten Positionsdaten lagekorrigiert ist. Die verschiedenen Positionsdaten werden hierbei durch Mittelwertbildung aus einer großen Zahl von Einzelmessungen gebildet, bei denen ein Abtaststrahl innerhalb einer vorgegebenen Strecke entlang der Schweißfuge und an verschiedenen Stellen quer über die Schweißfuge bewegt wird. Durch die Vielzahl der Einzelmessungen soll erreicht werden, daß der Einfluß eventueller Fehlmessungen reduziert wird. Derartige Fehlmessungen kommen in der Praxis immer wieder vor, weil die für die Ermittlung der Positionsdaten erforderlichen Spaltimpulse ausbleiben, z. B. weil ein zu schmaler Spalt vorhanden ist oder durch Störimpulse falsche "Spaltimpulse" erzeugt werden.

Nachteilig ist bei diesem bekannten Verfahren, daß es nur dann anwendbar ist, wenn die Fehlerquote bei den Einzelmessungen ein bestimmtes Maß nicht übersteigt. Zur Erkennung der Fehlerquote wird bei dem bekannten Verfahren innerhalb einer vorgegebenen Strecke die Differenz zwischen der Anzahl der Einzelmessungen und der Anzahl der auftretenden Spaltsignale gebildet und der Differenzwert mit einem vorgegebenen Toleranzwert verglichen, wobei bei Überschreiten des Toleranzwertes ein Fehlersignal abgegeben wird. Eine Korrektur von Meßfehlern findet nicht statt.

Es sind weiterhin Verfahren zum Nachführen eines Elektronenstrahls entlang der Stoßfuge zweier zu verschweißender Teile beim Elektronenstrahlschweißen bekannt, bei welchen der Elektronenstrahl mehrfach quer über die Stoßfuge geführt wird und bei welchen während der Querbewegung durch Auffangen von reflektierten Elektronen die Position der Stoßfuge festgestellt wird (DE-A-22 20 335, DE-A-29 37 646). Bei diesen Verfahren wird in jedem Abtastzyklus ein Positionssignal erzeugt, das zwischengespeichert wird und den weiteren Betrieb einer Ablenkeinheit steuert, wobei innerhalb jedes Abtastzyklus aus den Fugenimpulsen mehrere Meßwerte gewonnen werden und eine Mittelwertbildung durchgeführt wird.

Aus der letztgenannten DE-A-29 37 646 ist überdies eine Lösung dafür angegeben, wie der Verlauf der Stoßfuge auch bei Auftreten von Störungen bestimmt werden kann. Diese Lösung besteht darin, daß die Abtastzyklen durch Pausen - welche die Schweißzeiten darstellen - zeitlich getrennt werden und der Elektronenstrahl in jedem Abtastzyklus in Zickzackbewegungen über die Stoßfuge und mit einem Sprung und einer Rampe in Schweißrichtung geführt wird, wobei zur Messung der Position der Stoßfuge jeweils die Zeit zwischen einem durch die Stoßfuge erzeugten Fugenimpuls und dem nächstfolgenden Nulldurchgang der Steuerspannung des Ablenksystems ermittelt wird. Die Ermittlung der Position der Stoßfuge erfolgt hierbei ausschließlich in denjenigen Zeitintervallen, in denen sich der Elektronenstrahl, ausgehend von einem Punkt extremer Ablenkung, in Richtung auf die Mittellinie der Elektronenstrahlauslenkung bewegt. Im Anschluß an die Messungen eines Abtastzyklus wird das Positionssignal durch Mittelwertbildung zwischen den Meßwerten dieses Abtastzyklus gewonnen, indem die Summe der bei dem Abtastzyklus gewonnenen Meßwerte durch die Anzahl der während diesen Meßzyklen erzeugten Fugenimpulse geteilt wird.

Nachteilig ist bei allen diesen Verfahren, daß sie eine Mittelwertbildung von mehreren Meßdaten voraussetzen.

Für die Erkennung einer Stoßfuge beim Elektronenstrahlschweißen ist es auch bekannt, anstelle der reflektierten Elektronen die Röntgenstrahlen zu erfassen, die beim Eindringen von Elektronen in Materie entstehen (GB-A-1 105 115, US-A-3 974 381, US-A-3 597 577, DE-A-28 21 028, japanisches Patent Nr. 38-5955). Diese bekannten Einrichtungen bieten jedoch keine Möglichkeiten, die Stoßfuge auch noch bei Vorliegen von Fehlimpulsen oder sonstigen Störsignalen sicher zu erkennen.

Weiterhin ist ein Verfahren zum Nachführen eines Elektronenstrahls entlang der Stoßfuge zweier zu verschweißender Teile beim Elektronenstrahlschweißen bekannt, bei dem der Elektronenstrahl zickzackförmig mehrfach quer über die Stoßfuge geführt wird, wobei die Abtastzyklen durch Pausen zeitlich getrennt sind (DE-A-16 15 507). Allerdings wird hierbei keine Mittelwertbildung vorgenommen, sondern eine Zeit "s" zwischen einem Fugenimpuls 30 und einer Mittellinie M gemessen.

Schließlich ist auch noch ein Elektronenstrahlschweißverfahren bekannt, bei dem beim Nulldurchgang des quer über die Stoßfuge streichenden Elektronenstrahls ein Impuls erzeugt wird, während ein weiterer Impuls beim Kreuzen des Elektronenstrahls und der Stoßfuge erzeugt wird (DD-A-110 198). Bei zeitlich unterschiedlichem Auftreten der beiden Impulse wird die Strahlablenkung oder die Lage des Werkstücks verändert. Nachteilig ist hierbei, daß stets ein Impuls kommen muß und das Ausbleiben von Impulsen nicht berücksichtigt wird.

Der Erfindung liegt die Aufgabe zugrunde, die Position einer Schweißfuge an einer oder an mehreren Stellen entlang dieser Schweißfuge entweder fortlaufend während des Schweißvorgangs oder auch außerhalb des Schweißvorgangs schnell und sicher zu erkennen, und zwar auch dann, wenn statistische und/oder systematische Fehler vorliegen.

Diese Aufgabe wird dadurch gelöst, daß die Zeit (z. B. $t_2 - t_1$) eines Fugenimpulses beim Abtasten der Werkstücke in einer ersten Richtung und dem Maximum des Ablenksignals verglichen wird mit der Zeit ($t_3 - t_2$) zwischen dem Maximum des Ablenksignals und dem Auftreten eines Fugenimpulses beim darauffolgenden Abtasten der Werkstücke in der entgegengesetzten Richtung, und daß dann, wenn der Unterschied der beiden gemessenem Zeiten einen vorgegebenen Wert abweicht, die ermittelte Fugenposition, die der Zeit ($t_4 - t_3$) entspricht, verworfen wird und ein neuer Abtastvorgang beginnt, während dann, wenn der Unterschied der beiden gemessen Zeiten von dem vorgegebenen Wert nicht abweicht, die ermittelte Fugenposition für die Steuerung des Elektronenstrahls verwendet wird.

Somit betrifft die Erfindung ein Verfahren zum Nachführen eines Elektronenstrahls entlang der Stoßfuge zweier zu verschweißender Werkstücke beim Elektronenstrahlschweißen. Dieses Verfahren setzt sich aus einem Grundverfahren und einem Zusatzverfahren zusammen. Bei dem Grundverfahren wird die Zeit ($t_4 - t_3$) gemessen, die vom Auftreffen eines Fugenabtaststrahls auf die Stoßfuge zweier miteinander zu verschweißender Werkstücke bis zum Nulldurchgang der Ablenkkurvenform vergeht. Entsprechend dieser Zeit wird der Elektronenstrahl über ein Ablenksystem nachgeregelt. Bei dem Zusatzverfahren wird verhindert, daß Störimpulse anstelle eines Fugenimpulses die Messung verfälschen.

Der mit der Erfindung erzielte Vorteil besteht insbesondere darin, daß Fehler sehr schnell erkannt und eliminiert werden, wobei die Art der Fehler keine Rolle spielt. So werden Fehler, die auf einer falschen Fokussierung oder einer falsch eingestellten Intensität oder einer falschen Ablenkbreite des Elektronenstrahls beruhen, ebenso erkannt wie Fehler, die sich aus dem Nichtvorhandensein eines Spalts Im Abtastbereich oder aus dem Unterschreiten der Mindestspaltbreite für die Spalterkennung ergeben. Hierdurch ergibt sich eine erhöhte Meßsicherheit.

Ein Ausführungsbeispiel der Erfindung ist in der Zeichnung dargestellt und wird im folgenden näher beschrieben. Es zeigen:

Fig. 1     eine Anordnung zum Verschweißen zweier Werkstücke mittels eines Elektronenstrahls;

Fig. 2A     eine graphische Darstellung einer Spannung-$U_{10}$ über der Zeit, wobei diese Spannung aufgrund von Elektronen entsteht, die von den Werkstücken bzw. von der Schweißnaht beim Elektronenstrahlschweißen zurückgeworfen werden;

Fig. 28     einen aufbereiteten Fugenimpuls, der dann auftritt, wenn ein Abtaststrahl die Fuge zwischen zwei zu verschweißenden Werkstücken trifft;

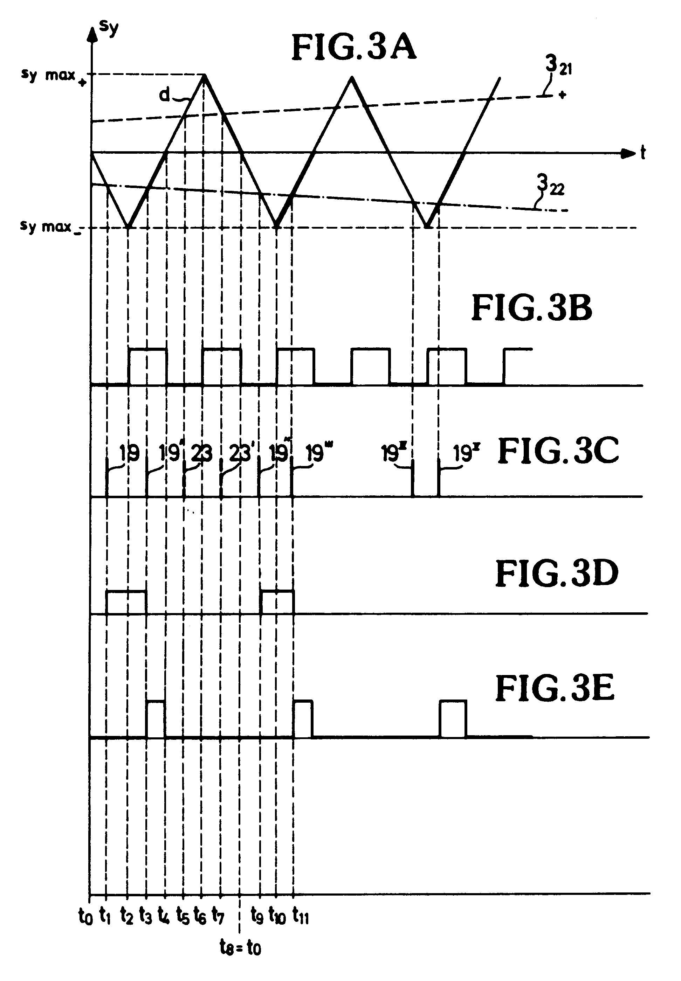

Fig. 3A     ein Weg-Zeit-Diagramm, wobei der Weg $s_y$ eine Richtung quer zur Stoßfuge ist;

Fig. 3B     Ausgangsimpulse eines Impulsgenerators, wobei die Breite dieser Impulse der Zeit entspricht, die zwischen einer maximalen Auslenkung eines Abtaststrahls und dem Durchgang dieses Strahls durch eine Null- oder Symmetrie-Linie vergeht und damit das mögliche Meßfenster darstellt;

Fig. 3C Fugenimpulse, die beim Überstreichen eines Abtaststrahls über eine Stoßfuge entstehen;

Fig. 3D Impulse, deren Breite dem Abstand zwischen zwei aufeinanderfolgenden zusammengehörenden Fugenimpulsen entspricht;

Fig. 3E Impulse, deren Breite der Zeit entspricht, die zwischen dem Auftreffen eines Abtaststrahls auf eine Stoßfuge und dem Durchgang dieses Strahls durch die Null- oder Symmetrie-Linie vergeht;

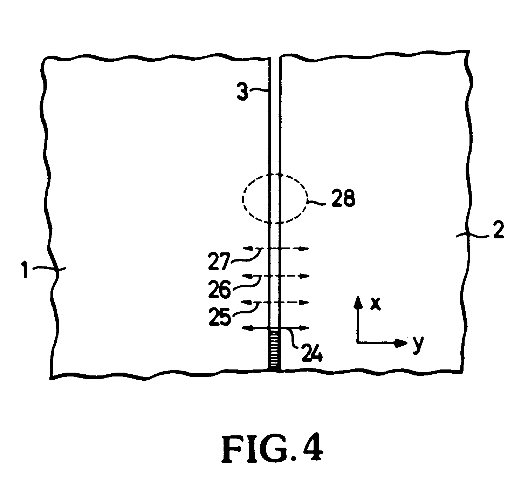

Fig. 4 zwei Werkstücke mit Stoßfuge, wobei die Wege eines die Stoßfuge abtastenden Strahls durch Doppelpfeile bzw. durch einen Kreis angedeutet sind;

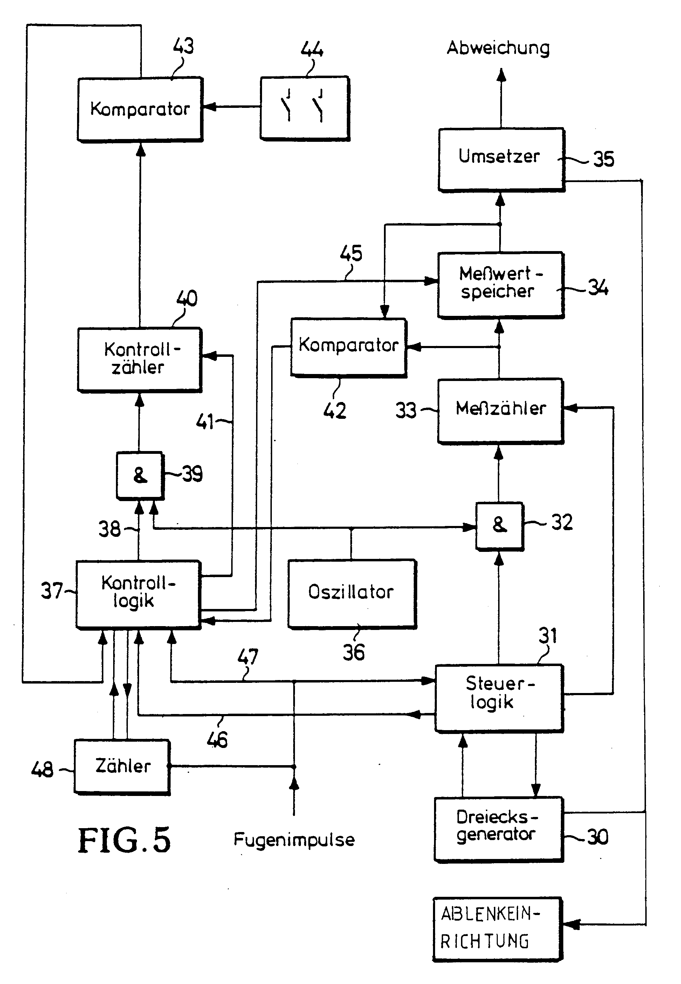

Fig. 5 ein Blockschaltbild für die Realisierung der Erfindung, wobei der rechte Teil das Grundprinzip ohne Störimpulsunterdrückung und der linke Teil einen Zusatz für die Störimpulsunterdrückung zeigen.

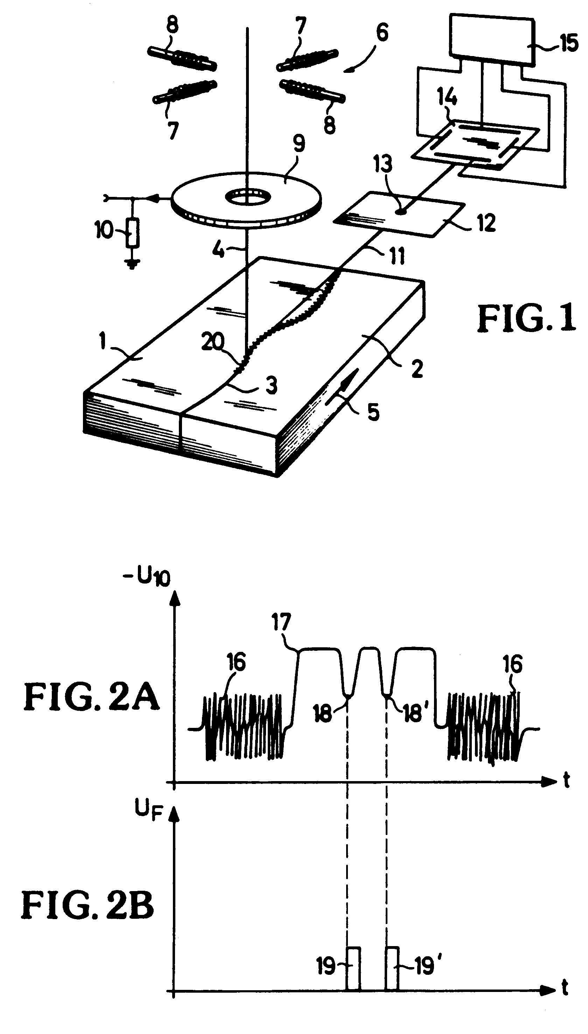

In der Fig. 1 ist das Prinzip einer an sich bekannten Anordnung dargestellt, bei der das erfindungsgemäße Verfahren zum Einsatz kommen kann. Diese Anordnung weist zwei miteinander zu verschweißende Werkstücke 1, 2 auf, die entlang einer Stoßfuge 3 gegeneinander stoßen. Um diese beiden Werkstücke 1, 2 miteinander zu verschweißen, wird ein stark gebündelter Elektronenstrahl 4 auf die Stoßfuge 3 geleitet, während die Werkstücke 1, 2 kontinuierlich entlang der durch einen Pfeil 5 angedeuteten Hauptrichtung der Stoßfuge bewegt werden. Obwohl im Beispiel der Fig. 1 der Elektronenstrahl 4 von einer ortsfesten Einrichtung ausgeht und die Werkstücke 1, 2 bewegt werden, ist die Erfindung auch bei solchen Anordnungen einsetzbar, bei denen die Werkstücke 1, 2 ortsfest bleiben und der Elektronenstrahl 4 bewegt wird.

Zur Beeinflussung der Richtung des Elektronenstrahls 4 ist ein Ablenksystem 6 mit zwei x-Ablenkspulen 7 und zwei y-Ablenkspulen 8 vorgesehen. Die y-Ablenkspulen 8 bewirken Auslenkungen des Elektronenstrahls 4 quer zur Stoßfuge 3, während die x-Ablenkspulen 7 bei entsprechender elektrischer Ansteuerung Ablenkungen des Elektronenstrahls 4 parallel zu der durch den Pfeil 5 gekennzeichneten Hauptrichtung der Stoßfuge 3 bewirken.

Der Elektronenstrahl 4 geht durch die Öffnung einer metallischen Auffangplatte 9 hindurch, die im Abstand über den Werkstücken 1, 2 parallel zur Werkstückoberfläche angeordnet und über einen elektrischen Widerstand 10 mit Erdpotential verbunden ist. Trifft der Elektronenstrahl 4 auf die glatten oder nahezu glatten Oberflächen der Werkstücke 1, 2 auf, dann werden von diesen Werkstücken 1, 2 Elektronen reflektiert. Diese reflektierten Elektronen werden anschließend von der Auffangplatte 9 aufgefangen und über den Widerstand 10 nach Erde abgeleitet. Am Widerstand 10 entsteht auf diese Weise ein konstanter Spannungsabfall. Trifft der Elektronenstrahl 4 auf die Stoßfuge 3, so werden die Elektronen wenigstens teilweise von der Fuge absorbiert, wodurch der rückgestreute Strom geringer wird. Dabei werden, wenn der Elektronenstrahl 4 auf die Stoßfuge 3 trifft, weniger Elektronen auf die Auffangplatte 9 geleitet. Der Strom durch den Widerstand 10 verringert sich und demgemäß auch der Spannungsabfall am Widerstand 10.

Der auf die Werkstücke 1, 2 bzw. auf die Stoßfuge 3 auftreffende Elektronenstrahl bewirkt nicht nur, daß Elektronen rückgestreut werden, sondern verursacht auch Röntgenstrahlen 11. Diese Röntgenstrahlen 11 entstehen dadurch, daß die Elektronen beim Durchgang durch Materie abgebremst werden. Da die Abbremsung der Elektronenstrahlen in der Stoßfuge 3 weniger stark ist als in den Werkstücken 1, 2, werden dann mehr Röntgenstrahlen 11 ausgesandt, wenn der Elektronenstrahl 4 auf die Werkstücke 1, 2 trifft. Diese Röntgenstrahlen bzw. ein Teil dieser Röntgenstrahlen 11 können über ein Abbildungssystem, beispielsweise eine Blende 12 mit einem Loch 13, auf einem positionsempfindlichen Sensor 14, z. B. einer Lateraldiode, abgebildet werden.

Mittels einer Auswerteschaltung 15, welche die Ströme des positionsempfindlichen Sensors auswertet, kann sowohl über die Intensität der auftreffenden Röntgenstrahlung festgestellt werden, ob der Röntgenstrahl 4 auf die Stoßfuge 3 oder auf die Werkstücke 1, 2 auftrifft, als auch unabhängig von der Intensität die exakte Lage des Auftreffpunkts. Die auf der Erfassung der Röntgenstrahlen 11 beruhende Einrichtung kann alternativ oder ergänzend zu der Einrichtung verwendet werden, die auf dem Prinzip des Auffangens rückgestreuter Elektronen beruht.

In der Fig. 2A ist der Verlauf der Spannung $-U_{10}$ am Widerstand 10 dargestellt. Obwohl eine Spannung, die aufgrund des Auftreffens von Röntgenstrahlen auf einen Sensor erzeugt wird, einen ähnlichen Verlauf hat wie die Spannung $-U_{10}$, wird im folgenden nur die Spannung $-U_{10}$ betrachtet. Während des Schweißvorgangs und außerhalb der Meßphase entsteht ein Rauschsignal 16, wenn es sich um ein unterbrochenes Messen bei einem sogenannten beam tracker handelt. Verläßt der Elektronenstrahl 4 während einer Meßphase den Aufschmeizbereich, so entsteht ein höherer Spannungspegel 17, der während der Querbewegung des Elektronenstrahls 4 beibehalten wird. Trifft der Elektronenstrahl 4 auf die Stoßfuge 3, so tritt im Verlauf der Spannung $-U_{10}$ ein Einbruch auf. Bei einer dreiecksförmigen Ablenkung sind zwei Einbrüche feststellbar, die in der Fig. 2A mit 18 und 18' bezeichnet sind. Anschließend steigt die Spannung $-U_{10}$ wieder auf den Pegel 17, um von dort auf das Rauschsignal 16 abzufallen.

Durch entsprechende Verarbeitung werden die Spannungsänderungen 18 und 18' In normierte Fingenimpulse 19 und 19' umgesetzt, wie sie in der Fig. 28 im Diagramm als $U_F$ dargestellt sind.

In der Fig. 2A ist deutlich zwischen einer Meßphase 17, 18, 18' und einer Schweißphase 16 unterschieden, wobei die Meßphase 17, 18, 18' mit einem Wedeln des Elektronenstrahls 4 quer zur Stoßfuge 3 verbunden ist. Dieses Wedeln ist In der Fig. 1 durch die Bezugszahl 20 angedeutet. Für die Durchführung der Erfindung ist es Indessen nicht erforderlich, daß der Elektronenstrahl 4 selbst über die Stoßfuge 3 wedelt, sondern das Wedeln kann auch von einem isolierten Meßsystem durchgeführt werden, beispielsweise von einem Lasertransceiver, der einen gebündelten Lichtstrahl über die Werkstücke 1, 2 und die Stoßnaht führt und aufgrund des empfangenen Lichtsignals die Stoßfuge 3 erkennt. Es ist außerdem möglich, die Stoßfuge 3 mittels eines Abtaststrahls kreisförmig oder in einer sonstigen geometrischen Figur zu überstreichen. Wichtig ist lediglich, daß ein Abtaststrahl, sei es der Elektronenstrahl selbst oder ein anderer Abtaststrahl, die Stoßfinge 3 zweimal schneidet, so daß ein Fingenimpuls oder -signal entsteht.

In der Fig. 3A ist die y-Koordinate des Wegs s eines die Stoßfuge 3 abtastenden Strahls über der Zeit dargestellt. Außerdem ist die y-Koordinate der Stoßfuge 3 gestrichelt dargestellt, und zwar einmal als positive y-Koordinate $3_{21}$ und einmal als negative y-Koordinate $3_{22}$. Werden die beiden Werstücke 1, 2 unter dem Elektronenstrahl 4 vorbeigeführt, so wird der abtastende Strahl zunächst in die negative Richtung abgelenkt, wo er zum Zeitpunkt $t_1$ auf die Stoßfuge $3_{22}$ trifft. Zum Zeitpunkt $t_1$ wird folglich ein Fingenimpuls 19 erzeugt und erfaßt (Fig. 3C). Da eine maximale Abtastamplitude $s_{ymax-}$ bzw. $s_{ymax+}$ symmetrisch zu einer gedachten Mittellinie vorgesehen Ist, die in der Fig. 3A mit der t-Achse zusammenfällt, schwenkt der Abtaststrahl über die Stoßfuge $3_{22}$ hinaus bis zum Punkt $s_{ymax-}$, von wo aus er bis zur Position $s_{ymax+}$ zurückgeführt wird. Auf diesem Weg kreuzt er zum Zeitpunkt $t_3$ erneut die Stoßfinge $3_{22}$, worauf ein weiterer Fingenimpuls 19' erzeugt wird. Anschließend schneidet der Abtaststrahl im Zeitpunkt $t_4$ die Symmetrielinie, die in der Fig. 3A mit der Zeitachse zusammenfällt. Hierauf kreuzt er die Stoßfuge $3_{21}$ im Zeitpunkt $t_5$, worauf ein Fugenimpuls 23 entsteht, der in der Fig. 3C gestrichelt dargestellt ist. Im darauffolgenden Zeitpunkt $t_6$ erreicht der Abtaststrahl die maximale Auslenkung $s_{ymax+}$, von wo aus er wieder zurückkehrt und die Stoßfuge $3_{21}$ erneut schneidet, was die Erzeugung eines Stoßfingenimpulses 23' zur Folge hat, der in der Fig. 3C ebenfalls gestrichelt dargestellt ist. Die Stoßfugenimpulse 23, 23' sind deshalb gestrichelt dargestellt, weil sie sich auf die Stoßfuge $3_{21}$ beziehen, die als Stoßfinge mit einer Abweichung der entgegengesetzten Polarität nur angenommen ist. In Wirklichkeit liegt nur eine Stoßfuge vor, z. B. die Stoßfuge $3_{22}$, weshalb auch nur die zu dieser Stoßfuge $3_{22}$ gehörenden Stoßfugenimpulse mit durchgehenden Strichen dargestellt sind.

Nachdem der Abtaststrahl die Stoßfuge $3_{21}$ überquert hat, gelangt er zum Zeitpunkt $t_8$ zur Symmetrieebene und schneidet zum Zeitpunkt $t_9$ die Stoßfuge $3_{22}$, was den Stoßfugenimpuls 19'' zur Folge hat. Im Zeitpunkt $t_{10}$ hat der Abtaststrahl seinen maximalen negativen y-Ausschlag $s_{ymax-}$ erreicht und kehrt von dort aus wieder zur Symmetrieachse zurück, wobei er zum Zeitpunkt $t_{11}$ unter Erzeugung eines Stoßfugenimpulses 19'' erneut die Stoßfuge $3_{22}$ überquert. Der weitere Vorgang läuft auf entsprechende Weise ab, weshalb auf seine genauere Beschreibung verzichtet wird.

Das erfindungsgemäße Verfahren beruht darauf, daß Impulse nur dann Fugenimpulse sein können, wenn sie symmetrisch bzw. nahezu symmetrisch (Fingenneigung) zu den Wendepunkten der Ablenkfunktion zur Zelt $t_2$ und $t_6$ auftreten. Mit Hilfe der erhaltenen Fingenimpulse werden folgende Schritte durchgeführt:
Zum Zeitpunkt $t_1$, wenn der erste Fingenimpuls 19 auftritt, wird ein Zeitzähler In Gang gesetzt, der die Zelt zählt, die bis zum Erreichen des Punktes $s_{ymax-}$ im Zeitpunkt $t_2$ vergeht. Vom Zeitpunkt $t_2$ bis zum Zeitpunkt $t_3$, also bis zum Auftreten des nächsten Fugenimpulses 19', zählt der Zeitzahler rückwärts, so daß dann, wenn die Stoßfuge 3 zu der Symmetrielinie parallel liegt, die Endsumme des Zeitzählers Null betragen muß.

Im dargestellten Fall verläuft die Stoßfuge $3_{22}$ nicht parallel zur Symmetrielinie, die mit der Zeitachse t identisch ist, sondern sie ist hierzu geneigt. Da die Zeit $t_2 - t_1$ größer als die Zeit $t_3 - t_2$ ist, befindet sich im Zeitzähler ein Überschuß, der auf die Neigung der Stoßfinge $3_{22}$ hindeutet. Mittels einer in der Fig. 3 nicht dargestellten Einrichtung 44, mit der die Meßfenster bestimmbar sind, wird die maximal zulässige Neigung eingestellt. Es sei nun angenommen, daß die Fugenimpulse durch Störimpulse simuliert werden, die vor oder nach der eigentlichen Soll-Zeit der Fugenimpulse auftreten. Um diese Störimpulse zu eliminieren, wird erfindungsgemäß davon ausgegangen, daß ein Fugenimpuls, der vor dem Erscheinen des Fugenimpulses 19 bzw. 19' auftritt, eigentlich nur ein Störimpuls sein kann.

Es sei angenommen, daß 19 und 19' die richtigen Fugenimpulse ($t_1$, $t_3$) sind. In diesem Fall startet ein Fehlerimpuls in der Zeit $t_0...t_1$ einen Kontrollzähler zu früh und das Kontrollfenster wird überschritten. Ein Fehlerimpuls in der Zeit $t_1...t_2$ hat dagegen keine Auswirkungen, da der Kontrollzähler bereits läuft. Ein Fehlerimpuls in der Zeit $t_2...t_3$ stoppt den Kontrollzähler zu früh, und das Meßfenster wird überschritten. Ein Fehlerimpuls in der Zeit $t_3...t_4$ hat keine Auswirkungen, da der Meßzyklus bereits läuft. Bleibt der Fugenimpuls 19' aus, so wird der Kontrollzähler zum Zeitpunkt $t_4$ gestoppt, und das Meßfenster ist überschritten. Bleibt der Fingenimpuls 19 aus, so wird der Kontrollzähler nicht gestartet, was z. B. beim Auftreten des Fugenimpulses 19' abgefragt und zur Sperre der Übernahme der Messung benutzt wird. Die Anzahl der ankommenden Impulse pro Zyklus wird gezählt. Wenn die Zahl ≠ 2 ist, liegt auf jeden Fall ein Fehler vor, der für den Fall, daß der dritte Impuls in dem Zeitbereich $t_4...t_8$ (für Fuge $3_{22}$) nicht mit Sicherheit erkannt wird, aber zu einer Fehlmessung führt.

In der Fig. 4 ist bei 24 gezeigt, wie der Abtaststrahl quer zur Stoßfuge verläuft, wenn er zeitlich so gesteuert wird, wie es die Fig. 3A darstellt. Man erkennt hierbei, daß er sich nur entlang der y-Achse bewegt, d. h. seine x-Auslenkung ist Null. Einer solchen x-Auslenkung bedarf es nicht unbedingt, wenn der Abtaststrahl ortsfest ist und die Werkstücke unter ihm in x-Richtung verschoben werden. Auf diese Weise tastet er automatisch die Stoßfuge 3 an verschiedenen Positionen ab. Durch die Bewegung der Werkstücke geht die kontinuierliche Ouerablenkung 24 in ein Band über.

Um den Verlauf der Stoßfuge 3 während des Schweißens ermitteln zu können, ist es möglich, daß der Abtaststrahl einen oder mehrere Sprünge in x-Richtung macht, wie es durch die Doppelpfeile 25 bis 27 angedeutet ist. Anstelle von diskreten Sprüngen sind auch Zickzackbewegungen des Abtaststrahls möglich, wie sie beispielsweise in der Fig. 4 der DE-PS 29 37 646 dargestellt sind, oder kreisförmige Bewegungen, wie sie durch die Bezugszahl 28 gekennzeichnet sind. Zickzackbewegungen entstehen, wenn gleichzeitig in x- und y-Richtung bewegt wird.

Die Steuerung der x- und y-Koordinaten des Abtaststrahls erfolgt dabei auf an sich bekannte Weise. Wenn der Abtaststrahl durch den Elektronenstrahl 4 selbst realisiert wird, kann das Ablenksystem 6 entsprechend angesteuert werden. Ist der Abtaststrahl unabhängig vom Elektronenstrahl, so hängt es von der Art des Strahls ab, welche Ablenkung verwendet wird.

In der Fig. 5 ist ein Blockschaltbild dargestellt, welches die Verarbeitung der Stoßfugenimpulse veranschaulicht.

Dieses Blockschaltbild zeigt im rechten Teil eine im wesentlichen bekannte Anordnung, während im linken Teil die erfindungsgemäße Ergänzung dargestellt ist. Die bekannte Anordnung weist einen Dreiecksgenerator 30 auf, der mit einer Steuerlogik 31 in Verbindung steht, deren Ausgang auf ein UND-Gatter 32 führt und die auch einen Meßzähler 33 steuert, der mit dem Ausgang des UND-Glieds 32 verbunden ist. Dem Meßzähler 33 ist ein Meßwertspeicher 34 nachgeschaltet, dessen Ausgang auf einen Umsetzer 35 führt. Die Ausgangssignale des Meßwertspeichers 34 und des Meßzählers 33 werden auf einen Komparator 42 gegeben, der den letzten gespeicherten richtigen Meßwert mit dem neuen Meßwert vergleicht. Ein Oszillator 36 taktet das UND-Glied 32. Der Meßwertspeicher 34 ist bei bekannten Anordnungen nicht vorgesehen.

Die erfindungsgemäße Ergänzung enthält eine Kontroll-Logik 37, die über eine Leitung 38 ein UND-Gatter 39 ansteuert, das vom Oszillator 36 getaktet wird. Der Ausgang des UND-Gatters 39 führt auf einen Kontrollzähler 40, der über eine Leitung 41 auch mit der Kontroll-Logik 37 in Verbindung steht. Vom Kontrollzähler 40 führt eine Verbindung auf einen Komparator 43, welcher seinerseits zu einer Einrichtung 44 führt, mit der die Meßfenster bestimmbar sind. Der Ausgang des Komparators 43 ist außerdem mit dem Eingang der Kontroll-Logik 37 verbunden. Ferner führt von der Kontroll-Logik 37 eine Verbindungsleitung 45 zu dem Meßwertspeicher 34. Weiterhin ist die Steinerlogik 31 über eine Leitung 46 mit der Kontroll-Logik 37 verbunden. Über eine Leitung 47 weden sowohl der Steuerlogik 31 als auch der Kontroll-Logik 37 Fugenimpulse zugeführt. Die Fugenimpulse werden auf einen Zähler 48 gegeben, der die Anzahl der Impulse innerhalb der Zeit $t_0...t_8$ oder $t_2...t_{10}$ zählt. Wenn die Anzahl einen bestimmten Wert überschreitet, wird die ermittelte Position verworfen und eine neue Abtastung vorgenommen. Dieser Zähler 48 tauscht Informationen in beiden Richtungen mit der Kontroll-Logik 37 aus.

Der Dreiecksgenerator 30 ist eng mit der Steuerlogik 31 verbunden, die neben den in der Fig. 3B dargestellten Impulsen auch noch weitere Impulse erzeugt. Beispielsweise gibt sie an den Meßzähler 33 ein Polaritätssignal und einen Speicherimpuls, während sie an den Impulsverlauf gemäß Fig. 3B mit dem Fugenimpuls 19' die Meßfenster gemaß Fig. 3E erzeugt und dem UND-Gatter 32 zuführt. Innerhalb dieser Meßfenster werden die Impulse des Oszillators 36 durch das UND-Gatter 32 in den Meßzähler 33 eingezählt. Der Umsetzer 35 setzt den Zählerstand des Meßzählers 33 in eine analoge Spannung entsprechend der Fugenabweichung um.

Die erfindungsgemäße Kontrolle erfolgt mit den Fingenimpulsen sowie mit verschiedenen Signalen, die von der Steuerlogik 31 über die Leitung 46 auf die Kontroll-Logik 37 gegeben werden.

Diese Kontroll-Logik 37 erzeugt ein Tor-Signal, das über die Leitung 38 auf das UND-Gatter 39 gegeben wird und das in der Fig. 3D dargestellt Ist. Außerdem erzeugt sie ein Polaritäts- und Vorsetzsignal, das über die Leitung 41 dem Kontroll-Zähler 40 zugeführt wird. Während des Tor-Signals werden die Impulse des Oszillators 36 In dem Kontrollzähler 40 gezählt und mit dem Meßfenster, das in der Einrichtung 44 festgelegt wird, verglichen. In Abhängigkeit vom Ergebnis dieses Vergleichs wird in der Kontroll-Logik 37 ein Speicherimpuls erzeugt und über die Leitung 45 dem Meßwertspeicher 34 zugeführt.

**Patentansprüche**

1. Verfahren zum Nachführen eines Elektronenstrahls entlang der Stoßfuge zweier zu verschweißender Werkstücke (1,2) beim Elektronenstrahlschweißen, wobei dieser Elektronenstrahl (4) durch ein Ablenksystem steuerbar ist und wobei eine Detektoreinrichtung vorgesehen ist, welche die von der Stoßfuge (3) ausgehenden Strahlen von den Strahlen unterscheidet, die von den Werkstücken ausgehen, und welche eine Steuereinrichtung (31) aufweist, die eine Abtastung der Werkstücke unter wenigstens einmaliger Überquerung der Stoßfuge vornimmt, dadurch gekennzeichnet, daß die Zeit ($t_2 - t_1$) zwischen dem Auftreten eines Fugenimpulses beim Abtasten der Werkstücke (1,2) in einer ersten Richtung und dem Maximum des Ablenksignals verglichen wird mit der Zeit ($t_3 - t_2$) zwischen dem Maximum des Ablenksignals und dem Auftreten eines Fugenimpulses beim darauffolgenden Abtasten der Werkstücke (1,2) in der entgegengesetzten Richtung, und daß dann, wenn der Unterschied der beiden gemessenen Zeiten einen vorgegebenen Wert abweicht, die ermittelte Fugenposition, die der Zeit ($t_4 - t_3$) entspricht, verworfen wird und ein neuer Abtastvorgang beginnt, während dann, wenn der Unterschied der beiden gemessenen Zeiten von dem vorgegebenen Wert nicht abweicht, die ermittelte Fugenposition für die Steuerung des Elektronenstrahls verwendet wird.

2. Verfahren nach Anspruch 1, dadurch gekennzeichnet, daß, wenn durch Ausbleiben des Fugenimpulses 19 (zur Zeit $t_1$) ein Kontrollzyklus $t_1...t_3$ nicht gestartet wird und damit der Zeitvergleich ($t_2 - t_1$)/ ($t_3 - t_2$) Null ergibt, die ermittelte Fugenposition verworfen und eine neue Abtastung vorgenommen wird.

3. Verfahren nach Anspruch 1, dadurch gekennzeichnet, daß die Anzahl der Impulse innerhalb der Zeit $t_0...t_8$ oder $t_2...t_{10}$ gezählt wird und dann, wenn die Anzahl einen bestimmten Wert überschreitet, die ermittelte Position verworfen und eine neue Abtastung vorgenommen wird.

4. Verfahren nach einem der Ansprüche 1 bis 3, dadurch gekennzeichnet, daß der letzte richtige Wert gespeichert wird und erst dann, wenn ein neuer richtiger Wert vorliegt, überschrieben wird.

5. Verfahren nach Anspruch 1, dadurch gekennzeichnet, daß der letzte gespeicherte richtige Meßwert und der neue Meßwert verglichen werden und daß bei überschreiten eines bestimmten Wertes die ermittelte neue Position verworfen und eine neue Abtastung vorgenommen wird.

6. Verfahren nach Anspruch 1, dadurch gekennzeichnet, daß die Stoßfuge (3) während des gesamten Schweißvorgangs kontinuierlich im wesentlichen senkrecht zu ihrem Längsverlauf (Pos. 24, Fig. 4) abgetastet wird.

7. Verfahren nach Anspruch 1, dadurch gekennzeichnet, daß die einzelnen Abtastvorgänge durch Pausen zeitlich getrennt sind (Pos. 25 - 27, Fig. 4).

8. Verfahren nach Anspruch 1, dadurch gekennzeichnet, daß der Elektronenstrahl (4) über die Stoßfuge (3) geführt wird, wobei durch Auffangen der vom Werkstück reflektierten Elektronen mittels eines Sensors (9, 10) in einer elektronischen Schaltung Impulse (19, 19') erzeugt werden, die der Position der Stoßfuge (3) entsprechen.

9. Verfahren nach Anspruch 1, dadurch gekennzeichnet, daß der Elektronenstrahl (4) über die Stoßfuge (3) geführt wird, wobei durch Auffangen von Röntgenstrahlen, die von der Stoßfuge ausgehen, durch einen Sensor (14) Fugenimpulse erzeugt werden, die der Position der Stoßfuge (3) entsprechen.

10. Verfahren nach Anspruch 9, dadurch gekennzeichnet, daß ein optisches Abbildungssystem (12, 13) vorgesehen ist, welches die Röntgenstrahlen auf einem positionsempfindlichen Sensor (14) abbildet, wobei die Ausgangssignale des positionsempfindlichen Sensors (14) für die Steuerung des Elektronenstrahls (4) verwendet werden.

11. Verfahren nach Anspruch 1, dadurch gekennzeichnet, daß die Abtastung der Werkstücke zickzackförmig und im wesentlichen quer zur Stoßfuge erfolgt.

12. Verfahren nach Anspruch 1, dadurch gekennzeichnet, daß ein Kontrollzähler (40) zu dem Zeitpunkt ($t_4$), zu dem das Ablenksignal vom negativen Bereich kommend den Nullpunkt schneidet, gestoppt wird.

13. Verfahren nach Anspruch 3, dadurch gekennzeichnet, daß der bestimmte Wert "zwei" für die Fugen und "vier" für die Spaltabtastung, bei welcher die Stoßfugen $3_{21}$, $3_{22}$ parallel zueinander verlaufen, beträgt.

**Claims**

1. A method of training an electron beam along the joint between two workpieces (1, 2) which are to be welded together by electon-beam welding, the said electron beam (4) being controllable by a deflecting system, a detector means being provided to distinguish between the rays emerging from the joint (3) and the rays emerging from the workpieces, and which has a control device (31) which scans the workpieces by traversing the joint at least once, characterised in that the time ($t_2$ - $t_1$) between the occurrence of a joint pulse during scanning of the workpieces (1, 2) in a first direction and the maximum of the deflection signal is compared with the time ($t_3$ - $t_2$) between the maximum of the deflection signal and the occurrence of a joint pulse during the successive scanning of the workpieces (1, 2) in the opposite direction and in that then, if the difference between the two measured times deviates by a given amount, the ascertained joint position which corresponds to the time ($t_4$ - $t_3$), is rejected and a fresh scanning operation commences, whereas if the difference between the two measured times does not diverge from the predetermined value, the ascertained joint position is used for controlling the electron beam.

2. A method according to claim 1, characterised in that if due to the absence of the joint pulse 19 (at the time $t_1$) a monitoring cycle $t_1$ ... $t_3$ is not started so that the time comparison ($t_2$ - $t_1$)/($t_3$ - $t_2$) yields a nil result, the ascertained joint position is rejected and a fresh scan is carried out.

3. A method according to claim 1, characterised in that the number Of pulses within the time $t_0$ ... $t_8$ or $t_2$ ... $t_{10}$ is counted and then, if the number exceeds a certain value, the ascertained position is rejected and a fresh scan is carried out.

4. A method according to one of claims 1 to 3, characterised in that the last correct value is stored and is over-written only when a new correct value is available.

5. A method according to claim 1, characterised in that the last stored correct measured value and the new measured value are compared and that if, a predetermined value is exceeded, the ascertained new position is rejected and a fresh scan is carried out.

6. A method according to claim 1, characterised in that throughout the entire welding process, the joint (3) is continuously scanned at right-angles to its length (reference numeral 24, Fig. 4),

7. A method according to claim 1, characterised in that the individual scanning processes are separated by pauses (reference numerals 25 to 27, Fig. 4).

8. A method according to claim 1, characterised in that the electron beam (4) is passed over the joint (3), and a sensor (9, 10), by picking up the electrons reflected by the workpiece, generates in an electronic circuit pulses (19, 19') which correspond to the position of the joint (3).

9. A method according to claim 1, characterised in that the electron beam (4) is passed over the joint (3), a sensor (14) picking up X-rays which emerge from the joint and generating joint pulses which correspond to the position of the joint (3).

10. A method according to claim 9, characterised in that an optical imaging system (12, 13) is provided which displays the X-rays on a position-sensitive sensor (14), the output signals from the position-sensitive sensor (14) being used to control the electron beam (4).

11. A method according to claim 1, characterised in that the workpieces are scanned in a zig-zag pattern and substantially crosswise to the joint.

**12.** A method according to claim 1, characterised in that a monitoring counter (40) is stopped at the point in time ($t_4$) at which the deflection signal intersects the zero point emanating from the negative zone.

**13.** A method according to claim 3, characterised in that the predetermined value amounts to "two" for the joints and "four" for the gap scan, at which the joints $3_{21}$, $3_{22}$ extend parallel with each other.

**Revendications**

**1.** Procédé pour guider un faisceau d'électrons le long du joint de deux pièces (1, 2) à souder par soudage à faisceau d'électrons, dans lequel ce faisceau d'électrons (4) peut être commandé par un système de déviation et dans lequel il est prévu un dispositif de détection qui fait la distinction entre les faisceaux partant du joint (3) et les faisceaux qui partent des pièces à souder, et qui comporte un dispositif de commande (31) qui effectue un balayage des pièces en traversant au moins une fois le joint, caractérisé en ce que le temps ($t_2$ - $t_1$) séparant l'apparition d'une impulsion de joint lors du balayage des pièces (1, 2), dans un premier sens et le maximum du signal de déviation, est comparé avec le temps ($t_3$ - $t_2$) séparant le maximum du signal de déviation et l'apparition d'une impulsion de joint lors du balayage suivant des pièces (1, 2) dans le sens opposé et en ce qu'ensuite, lorsque la différence entre les deux temps mesurés s'écarte d'une valeur donnée, la position de joint déterminée qui correspond au temps ($t_4$ - $t_3$) est rejetée et une nouvelle opération de balayage commence, tandis que lorsque la différence entre les deux temps mesurés ne s'écarte pas de la valeur donnée, la position de joint déterminée est utilisée pour la commande du faisceau d'électrons.

**2.** Procédé selon la revendication 1, caractérisé en ce que dans le cas où un cycle de contrôle $t_1$...$t_3$ ne démarre pas, en cas de défaut de l'impulsion de joint (19) (au temps $t_1$) et que donc la comparaison des temps $t_2$ - $t_1$)/($t_3$ - $t_2$) donne zéro, la position de joint déterminée est rejetée et il est procédé à un nouveau balayage.

**3.** Procédé selon la revendication 1, caractérisé en ce que le nombre d'impulsions est compté pendant le temps $t_0$ ... $t_8$ ou $t_2$ ... $t_{10}$ et ensuite, lorsque ce nombre dépasse une valeur déterminée, la position déterminée est rejetée et il est procédé à un nouveau balayage.

**4.** Procédé selon l'une des revendications 1 à 3, caractérisé en ce que la dernière valeur correcte est mémorisée et n'est écrasée que lorsqu'apparait une nouvelle valeur correcte.

**5.** Procédé selon la revendication 1, caractérisé en ce que la dernière valeur de mesure correcte mémorisée et la nouvelle valeur de mesure sont comparées et en ce qu'en cas de dépassement d'une valeur déterminée, la nouvelle position déterminée est rejetée et il est procédé a un nouveau balayage.

**6.** Procédé selon la revendication 1, caractérisé en ce que le joint (3) est balayé en continu pendant toute l'opération de soudage, à peu près perpendiculairement à son extension longitudinale (réf. 24, fig. 4).

**7.** Procédé selon la revendication 1, caractérisé en ce que les différentes opérations de balayage sont séparées dans le temps par des pauses (réf. 25 à 27, fig. 4).

**8.** Procédé selon la revendication 1, caractérisé en ce que le faisceau d'électrons (4) est guidé sur le joint (3), des impulsions (19, 19') qui correspondent à la position du joint (3) étant engendrées par captage des électrons réfléchis par la pièce, au moyen d'un capteur (9, 10) d'un circuit électronique.

**9.** Procédé selon la revendication 1, caractérisé en ce que le faisceau d'électrons (4) est guidé sur le joint (3), des impulsions de joint qui correspondent à la position du joint (3) étant produites par un capteur (14), par captage de rayons X partant du joint.

**10.** Procédé selon la revendication 9, caractérisé en ce qu'il est prévu un système de reproduction (12, 13) optique qui reproduit les rayons X sur un capteur (14) sensible à la position, les signaux de sortie du capteur (14) sensible à la position étant utilisés pour commander le faisceau d'électrons(4).

**11.** Procédé selon la revendication 1, caractérisé en ce que le balayage des pièces s'effectue en zig-zag et essentiellement transversalement au joint.

**12.** Procédé selon la revendication 1, caractérisé en ce qu'un compteur de contrôle (40) est stoppé à l'instant ($t_4$) auquel le signal de déviation, venant de la zone négative, passe par le point zéro.

13. Procédé selon la revendication 3, caractérisé en ce que la valeur déterminée est de "deux" pour les joints et de "quatre" pour la détection de fente pour laquelle les joints $3_{21}$, $3_{22}$ sont parallèles entre eux.

FIG.1

FIG.2A

FIG.2B

FIG.3A

FIG.3B

FIG.3C

FIG.3D

FIG.3E

FIG. 4

FIG.5